Europäisches Patentamt

(19) European Patent Office

Office européen des brevets

(11) Publication number: **0 011 504**
**B1**

(12) **EUROPEAN PATENT SPECIFICATION**

(45) Date of publication of patent specification: **20.07.83**

(21) Application number: **79302606.3**

(22) Date of filing: **16.11.79**

(51) Int. Cl.³: **C 25 B 7/00, C 08 J 5/18, C 25 D 1/18**

(54) Method of, use of an ion-exchange membrane for, and apparatus for electrodeposition of a protein.

(30) Priority: **17.11.78 JP 141863/78**

(43) Date of publication of application:
**28.05.80 Bulletin 80/11**

(45) Publication of the grant of the patent:
**20.07.83 Bulletin 83/29**

(84) Designated Contracting States:
**BE DE FR GB IT NL SE**

(56) References cited:
**FR - A - 448 230**
**FR - A - 510 931**
**FR - A - 574 552**
**FR - A - 2 270 267**
**FR - E - 31 703**
**GB - A - 511 088**
**US - A - 3 556 969**
**US - A - 3 758 396**

(73) Proprietor: **KUREHA KAGAKU KOGYO KABUSHIKI KAISHA**
**8 Horidome-cho, 1-chome Nihonbashi Chuo-ku Tokyo (JP)**

(72) Inventor: **Sakagami, Teruo**
**3 Machida Ushiroda-machi**
**Iwaki-shi, Fukushima-ken (JP)**
Inventor: **Kato, Tadaaki**
**K-407, 3-27 Nakadai**
**Itabashi-ku, Tokyo (JP)**
Inventor: **Hirai, Toru**
**55-1 Sekishita Nishiki-machi**
**Iwaki-shi, Fukushima-ken (JP)**
Inventor: **Murayama, Naohiro**
**79-16 Aza-Suganezawa Kamata,**
**Taira (JP)**

(74) Representative: **Myerscough, Philip Boyd et al,**
**J.A.Kemp & Co. 14, South Square Gray's Inn London, WC1R 5EU (GB)**

Courier Press, Leamington Spa, England.

## Method of, use of an ion-exchange membrane for, and apparatus for electrodeposition of a protein

The present invention relates to the electrodeposition of a protein on an ion-exchange membrane by electrophoresis.

The technique of depositing an electrically charged high molecular weight substance by electrophoresis on an electrode is well known and has been widely applied in industry, for example in painting. The advantage of this technique is that it is possible tp deposit high molecular weight substances with relatively uniform thickness on electrodes of any shape, and that it is not necessary to heat and evaporate off a liquid containing the charged high molecular weight substance to obtain that substance.

However, since electrically charged high molecular weight substance is directly deposited on electrodes in such an electrophoretic method, there are drawbacks such as the simultaneous reactions between the charged substance and the electrodes and, when the charged substance is in solution or in suspension in water, between that substance and various bases generated by the simultaneous electrolysis of the water. Especially in cases where electrophoresis is used in the separation of naturally occurring high molecular weight macromolecules, since such macromolecules are apt to undergo, for example, oxidation or reduction, unfavorable chemical changes such as degeneration or deterioration, are frequently observed.

Moreover, in the case where the electrophoresis is used to deposit a naturally occurring high molecular weight macromolecule, such as a protein, on an electrode the following drawbacks are frequently noticed:

(1) Gases such as oxygen and hydrogen are usually generated due to electrolysis of water at the surface of the electrode. These gases persist within the film of electrodeposited macromolecule on the surface of the electrode. As a result, it is frequently impossible to obtain a film of the macromolecule which does not contain bubbles of gas.

(2) It is necessary to give an appropriate electric charge to a high molecular weight substance so that it can move towards the surface of the electrode by electrophoresis. The degree of ionisation of the substance is especially important in this respect. However, there are many cases where conditions corresponding to the correct degree of ionisation of a substance are not necessarily those most appropriate for electrically depositing the substance on the surface of an electrode. In other words, the overvoltage of the electrode usually fluctuates widely under the conditions at which an appropriate charge is given to the high molecular weight substance. For this reason, there are many cases where a high operational voltage is necessary or, in certain circumstances, the electrode is affected.

(3) Even in cases where the conditions for electrophoresis of a high molecular weight substance to the surface of an electrode are satisfactory, since, for example, a water-soluble protein is deposited on the surface of the electrode still having water absorbed thereon, it is frequently impossible to obtain an electrodeposited layer of protein at a high density sufficiently free of water molecules. This phenomenon is due to the fact that the conditions for electrophoresis and for dehydration of the protein are different, and especially because the dependencies of both conditions on pH is different from each other. In addition, in usual electrodeposition methods, it is extremely difficult to adjust both conditions satisfactorily.

(4) Depending on the construction of a particular electrode, the charged high molecular weight substance, for instance, a protein, and the surface of the electrode may get tangled together during formation of an electrodeposited layer of the substance, or the layer may retain gases generated electrolytically. As a result, the operating voltage is raised drastically as time passes. This not only reduces the amount of protein recovered but also makes the removal of the protein layer from the electrode difficult and noticeably reduces the quality of the deposited film of protein.

FR—A—510931 discloses a method of removing impurities contained in glue by purifying the glue by electrodialysis. On application of an electric field negatively charged components and albumin contained in the glue are deposited or pass through an anodic diaphragm, resulting in their removal from the glue. FR—A—574552 relates to a method for electrophoretically manufacturing rubber products from latex by electrodeposition onto a diaphragm made of non-conductive and liquid-permeable materials such as gypsum, clay, asbestos, parchment paper or fiber. FR—E—31703, which is a patent of addition to FR—A—574552, is concerned also with the manufacture of rubber products from latex by electrophoresis. A second diaphragm is interposed between a first diaphragm and a cathode. The second diaphragm can be made of a permeable material such as a textile or a semipermeable material such as parchment paper. All three French specifications are very old, being published in the 1920's.

It has now been discovered that when a protein is electrically deposited by electrophoresis from a liquid in which it is dissolved or dispersed, the problems mentioned above can be overcome by interposing an ion-exchange membrane between an anode and a cathode of a cell and depositing the protein not on the surface of the electrode but on the ion-exchange membrane. By this technique it is possible to produce a homogeneous film of protein which does not contain any gas bubbles.

Accordingly, the present invention provides a method of electrically depositing a protein on an ion-exchange membrane, which method comprises introducing the protein dissolved or dispersed in an aqueous liquid into a chamber of an electrodepository system, said electrodepository system having an anode and a cathode and being divided into two or more chambers by one or more respective ion-exchange membranes disposed between said anode and cathode and an aqueous electrolyte solution being introduced into the electrode chamber separated from said chamber into which the protein solution or dispersion is introduced by the ion-exchange membrane onto which the protein is to be deposited, and causing the protein to be deposited on said ion-exchange membrane by electrophoresis, the pH of the surface of the ion-exchange membrane on which protein is deposited being controlled by appropriately adjusting the difference between the pH of the aqueous electrolyte solution and the pH of the aqueous solution or dispersion of protein.

The present invention also provides apparatus for the electrodeposition of a protein comprising at least one cell comprising an anode, a cathode, and being divided into two or more chambers by one or more respective ion-exchange membranes disposed between said anode and cathode, means for introducing an aqueous solution or dispersion of a protein into an appropriate chamber to result in the electrodeposition of the protein on a surface of a said membrane in use, and means to remove protein thus deposited from said surface.

An important feature of the present invention is that at least one ion-exchange membrane is positioned between the electrode to which the protein is attracted and the liquid containing the protein. Thus where the protein has a positive electric charge and it is wished to move the charged protein towards the cathode, the ion-exchange membrane is positioned between the cathode and the liquid containing the charged protein. The protein is moved by electrophoresis towards the cathode and is deposited on the surface of the ion-exchange membrane. On the other hand, where the protein is negatively charged and it is wished to move the charged protein towards the anode, the ion-exchange membrane is positioned between the anode and the liquid containing the negatively charged protein. Accordingly, where a single membrane is employed, the electrode which is the antipode to that towards which the protein moves contacts with the liquid containing the protein.

In the case where two ion-exchange membranes are used, the liquid containing the protein is placed between these two membranes. Since the spaces between the ion-exchange membranes and the electrodes, that is the anode chamber and the cathode chamber, should be in an electroconductible state, an electrolytic solution such as an aqueous solution of an inorganic acid or an alkaline substance is placed therein.

One advantage of the present invention is that it is possible to control the conditions of electrophoresis and also the conditions of dehydration of the electrodeposited protein. This may be achieved by changing the concentration of the inorganic acid or the alkaline substance in each chamber in relation to the pH values at the surface of the electrodes and of the solution containing the protein. For instance, where a positively charged protein dispersed in water is to be electrically deposited on an ion-exchange membrane, the cathode and the aqueous acidic dispersion of the protein can be separated by an anion-exchange membrane and the cathode chamber filled with an aqueous alkaline solution. In this case, the positively charged protein moves by electrophoresis towards the cathode and adheres to the anion-exchange membrane. However, $OH^-$ ions in the aqueous alkaline solution in the cathode chamber can pass relatively easily through the anion exchange membrane to neutralize the positively charged protein in the surface of the membrane. Consequently, it becomes possible to adjust the optimum conditions of operation relatively easily by controlling, for example, the concentration of the charged protein, pH of the aqueous dispersion of the charged protein and of the aqueous alkaline solution, the current intensity, the exchange capacity of the ion-exchange membrane.

Also in such cases, however, especially where pH of the aqueous dispersion of the protein is relatively near to neutrality and the diffusion of large amounts of $OH^-$ ions lowers the concentration of the alkaline substance in the cathode chamber, it is preferable to utilize the cation-exchange membrane. The marked reduction in the concentration of alkaline substance in the cathode chamber when an anion-exchange membrane is used necessitates the use of a higher voltage for electrodeposition. On the other hand, the movement of $OH^-$ ions through a cation-exchange membrane is relatively easy at the relatively high concentrations of alkaline substance.

An additional advantage of the use of two ion-exchange membranes is that by interposing of one more cation-exchange membrane between the anode and the aqueous dispersion of protein and filling the space between this membrane and the anode chamber with aqueous hydrochloric acid it is possible, due to the presence of the cation-exchange membrane, to prevent the pH of the aqueous dispersion of protein increasing and to maintain the pH constant.

Although the material of the ion-exchange membrane used in this invention is not especially restricted, the membrane may comprise a chemically resistant highly-bridged polymeric skeleton on which many anion- and cation-exchange groups, such as sulfonate, carboxylate, phenol and ammonium groups, are attached as substituents. For instance, the membrane may be a bridge poly (acrylic acid) · resin or bridge poly (methacrylic acid) resin in which, for instance, divinylbenzene or trivinylbenzene is used as the bridging agent, sulfonated copolymer of styrene and divinylbenzene or a quarternized homopolymer or copolymer vinylpyridine.

A membrane comprising chemical-resistant fluoropolymer resins is especially advantageous. Usually, layers of hydrophilic high molecular weight substances such as proteins can be very easily detached from such membranes. Strong cohesion of the protein to the fluoropolymer and intermingling of the protein and fluoropolymer molecules seldom occurs.

As ion-exchange membranes comprising fluoropolymer resins, those having sulfonate group(s), carboxylate group(s) or phenol group(s) attached to homopolymer(s) or copolymer(s) or tetrafluoroethylene, chlorotrifluoro-ethylene, trifluoroethylene, hexafluoropro-pylene, vinylidene fluoride or $\alpha,\beta,\beta$-trifluoro-styrene can be used. A membrane comprising a copolymer of perfluorovinyl ether and tetrafluoroethylene, which has pendant-type sulfonate groups ("Nafion", a product of E.I. Du Pont de Nemours & Co. Inc.) is one of the preferred membranes.

All electrodes usually used for electrochemical reactions can be employed in this invention. Suitable materials for the cathode include iron, stainless steel and platinum. The anode may be titanium, carbon, platinum or a dimensionally stable anode (DSA) of titanium coated with ruthenium oxide.

The electrodes and ion-exchange membranes are fabricated to suitable shapes for use in the invention. For instance, where a plate form of protein film is to the produced, plate electrodes and ion-exchange membranes are suitable. For the purpose of continuously producing a cylindrical protein film, the electrodes and the ion-exchange membranes should themselves be cylindrical. To continuously produce a flat protein film, it is preferable to use an ion-exchange membrane in the form of a rotating drum and to peel the film off the drum.

The kinds of protein that can be electrically deposited is not restricted. Not only simple proteins which liberate only amino acids on hydrolysis but also complex proteins such as glycoproteins and lipoproteins containing other organic molecules/groups can be deposited by the present invention. Moreover, these proteins can be deposited not only from aqueous solution but also from aqueous dispersions, for example in which the protein is in suspension. Mixtures of proteins can be electrodeposited.

Examples of proteins which can be electrically deposited include simple proteins such as ovoalbumin, lactalbumin, serumalbumin, leucosin, legumelin, ovoglobulin, serum-globulin, lactoglobulin, glutenin, prolamine, collagen, elastin, keratin, fibroin, histone, and protamine; phosphoproteins, such as casein, vitellin and phosvitin; chromoproteins such as ferritin, haemocyanin, haemoglobin, and myo-globin; glycoproteins such as glucoprotein and mucoprotein; nucleoproteins; and lipoproteins. It is especially interesting to note that it is possible to deposit a complex product formed by an antigen-antibody reaction in blood and thus separate the product from the blood. Thus it is expected that the present invention will find applications in medicine.

Since the above-mentioned proteins contain both groups dissociable into acids groups and groups dissociable into base groups, they are present in solution or suspension as zwitterions. Since a protein will bear a negative electric charge at a pH which is more alkaline than the protein's isoelectric point and will bear a positive charge at a pH which is more acidic than the protein's isoelectric point, the pH of the aqueous solution dispersion of the protein may be adjusted depending on protein or the electrode to which it is attracted. Generally, the approximate range of pH adopted in the present invention is from 2.0 to 10.0. The protein molecules which are charged either positively or negatively at a particular pH move towards either the cathode or the anode by electrophoresis on the application of a direct current and arrive at the surface of the ion-exchange membrane.

Generally, the amount of water absorbed by a protein fluctuates widely depending on pH. Accordingly, when the protein molecule arrives at and is deposited on the surface of the ion-exchange membrane it is preferable that the amount of water absorbed by the protein is as small as possible, that is, the pH of the protein molecule is in a range in which the protein is dehydrated. Especially where a particularly homogeneous film of protein is to be produced, it is necessary for the pH of the surface of the ion-exchange membrane to be from 2.0 to 10.0. For this purpose, it is necessary to adjust the pH of the aqueous solution or dispersion of the protein.

For instance, where a positively charged protein is deposited on the surface of an ion-exchange membrane, the degree of dehydration of the deposited protein is raised by employing an ion-exchange membrane having an alkline pH at its surface. That is, it is necessary to raise the pH of the surface of the ion-exchange membrane to a value higher than the pH of the aqueous solution or dispersion of protein. The cathode chamber is therefore filled with an aqueous alkaline solution, for example of 0.1 to 5N. An aqueous 0.1 to 5N sodium hydroxide solution is frequently used for this purpose.

Conversely, where a negatively charged protein is deposited on the surface of an ion-exchange membrane, it is possible to increase the degree of dehydration of the resultant film of protein by filling the anode chanber with an aqueous acidic solution. Preferably the acid concentration is 0.1 to 5N.

It is also possible to deposit a water-insoluble protein film by salting out a protein which has been dissolved in water, or such a protein in an aqueous dispersion by adjusting the pH of the aqueous space between an ion-exchange membrane and the appropriate electrode. This process can be used when a water-insoluble film of protein is required starting from a water-soluble protein.

The invention will now be described with reference to the accompanying drawings in which:

Figure 1 is schematic diagram of one embodiment of apparatus which can be employed for the method of the present invention;

Figure 2 is a schematic diagram of another form of apparatus which can be used in the present invention; and

Figure 3 is a schematic diagram of apparatus which can be employed to deposit a film of protein continuously.

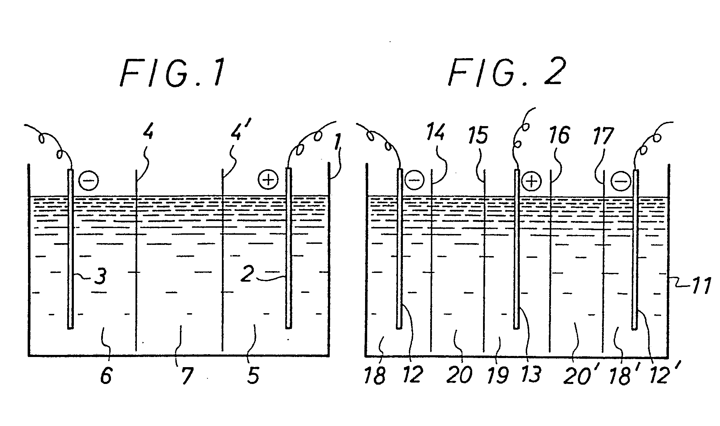

Figure 1 shows an electro-depositing cell provided with two ion-exchange membranes. In this Figure 1, 2, 3, 4, and 4', 5, 6 and 7 show, respectively, the cell, the anode, the cathode, cation-exchange membranes, the anode chamber having on one side thereof the cation-exchange membrane 4' as a diaphragm, the cathode chamber having on one side thereof another cation-exchange membrane 4 as a diaphragm, and the chamber between the two cation-exchange membranes 4 and 4', In use, the anode chamber 5 contains an aqueous inorganic acid solution, for instance aqueous 0.1N hydrochloric acid, and the cathode chamber 6 contains an aqueous alkaline solution, for instance, aqueous 0.2N sodium hydroxide solution. The amount of the aqueous electrolyte in the anode chamber 5 and the cathode chamber 6 is adjusted depending on amount of the aqueous solution or dispersion of protein in chamber 7.

To operate the cell, an aqueous solution or dispersion of a protein is introduced into chamber 7, and an aqueous inorganic acid solution and an aqueous alkaline solution are respectively introduced into the anode chamber 5 and the cathode chamber 6. A direct current is applied between the electrodes at a fixed stationary voltage.

Where the pH of the aqueous solution or dispersion of the protein is adjusted to, for instance, 3.5 and by this procedure the protein is positively charged, the protein molecules move by electrophoresis toward the cathode and are electrically deposited on the surface of the cation-exchange membrane 4 which is the diaphragm forming one side of the cathode chamber 6.

It is possible to provide a magnetic stirrer at the bottom of the chamber 7 and to introduce the aqueous solution or dispersion of protein from an inlet provided towards the top of one of the walls of the chamber 7 continuously at a fixed rate. The protein can be deposited on the cation-exchange membrane 4 under agitation, and at the same time, spent aqueous solution or dispersion can be discharged from an outlet provided towards the top of another wall of the chamber 7. Moreover, by circulating the aqueous inorganic acid solution in the anode chamber 5 and the aqueous alkaline solution in the cathode chamber 6, respectively, and at the same time by adjusting the circulation in order to maintain the concentration of the acid and the alkali, respectively, constant, it is possible to operate the cell 1 continuously.

The apparatus of Figure 2 has been designed for simultaneous and parallel operation, in which two spaces are provided for the aqueous solution or dispersion of the protein. In Figure 2, 11, 12 and 12', 13, 14, 15, 16, 17, 18 and 18', 19, 20 and 20', respectively show, the cell, two cathodes, the central anode, four ion-exchange membranes of the same kind, two cathode chambers having on one side thereof ion-exchange membranes 14 and 17 respectively as diaphragms, the anode chamber formed between the ion-exchange membranes 15 and 16, and chambers formed respectively by the ion-exchange membranes 14 and 15, and 16 and 17.

The operation of the cell of Figure 2 may be performed in the same manner as for the cell of Figure 1. In the case where the pH of the aqueous solution or dispersion of protein introduced into the chambers 20 and 20' is adjusted so as to charge the protein negatively, the protein molecules move toward the anodes in electrophoresis and arrive at the ion-exchange membranes 15 and 16. Thus the deposition of the protein is carried out in parallel and accordingly, the amount of deposition per unit time is twice the amount per unit time obtainable using the cell of Figure 1, provided other operating conditions are the same.

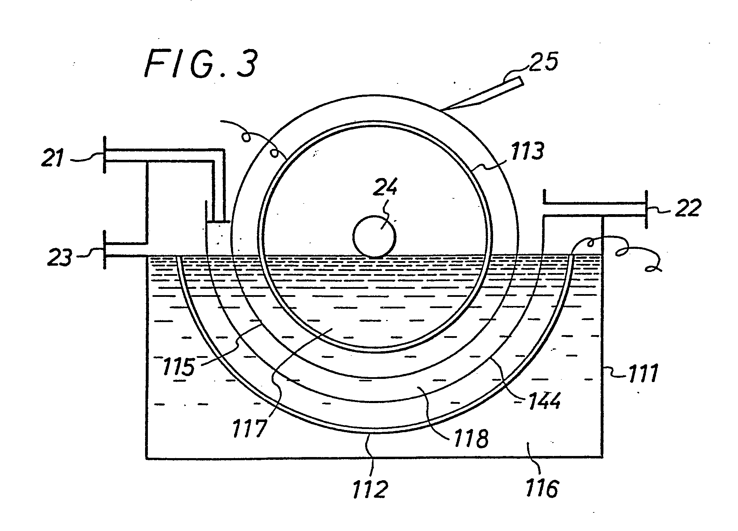

The apparatus of Figure 3 is especially suitable for the continuous production of a film of protein, wherein the electrodes and the ion-exchange membranes are designed to be of the rotatory drum type. In Figure 3, the cell 111 is designed to hold rotatory drum electrodes. The cathode 112 is of the half drum type and the anode 113 possesses a drum type structure. The ion-exchange membranes 144 and 115 are of the half drum type and drum type respectively. The cathode chamber 116 is formed by the inner wall of the cell 111 and the diaphragm of the ion-exchange membrane 144.

The anode chamber 117 is formed by the ion-exchange membrane 115 as a diaphragm. The chamber 118 formed by the two ion-exchange membranes 144 and 115 holds the aqueous solution or dispersion of the protein to be deposited. At one end of the upper part of the chamber 118, an inlet 21 for the aqueous solution or dispersion is provided. At another end of the upper part of the chamber 118, there is an outlet 22 for the aqueous solution or dispersion. In Figure 3, a manifold 23 is provided with a supply port to feed an aqueous electrolyte solution into the cathode chamber. The apparatus is provided with a rotary shaft 24 and a scraper for the film of protein which has been deposited on the ion-exchange membrane 115 is positioned at 25. In addition, the rotatory shaft 24 is tubular and designed so that the aqueous electrolyte solution entering and exiting the anode chamber 117 flows through this shaft.

In use of the cell 111 an aqueous solution or dispersion of a protein is continuously introduced into the chamber 118 via the inlet 21 after having been adjusted so as to make the charge of the protein molecules negative. An aqueous alkaline solution is introduced into the cathode chamber 116 via the inlet in the manifold 23 and is subsequently discharged via the outlet in the same manifold 23 after circulation in the cathode chamber. An aqueous inorganic acid solution is introduced into the anode chamber 117 through the rotatory shaft 24 and is subsequently discharged from the chamber via 24 after circulation in the anode chamber. The cylindrical ion-exchange membrane 115 and the cylindrical anode 113 are rotated at a fixed r.p.m. by a motor connected to the rotatory shaft 24.

On applying a direct current at a fixed voltage to the cell 111, since the protein in the chamber 118 is charted negatively, it flows electrophoretically towards the anode 113 and is deposited on the surface of the ion-exchange membrane 115 to form a film of the protein. The protein film deposited on the membrane 115 is removed by the scraper 25 provided on a suitable site adjacent the membrane and thus can be continuously produced. In addition, spent aqueous solution or dispersion is discharged from the outlet provided at the other end of the chamber 118.

Other designs of apparatus can be used to effect the present invention. For instance, it is possible to install an apparatus in which the electrodes and the ion-exchange membranes are designed and constructed in the shape of endless belts, or an apparatus having cylindrical electrodes and ion-exchange membranes. In either case, the ion-exchange membrane on which protein is deposited is continuously movable along a closed path relative to the means for removing electrodeposited protein therefrom.

The following Examples illustrate the present invention.

Example 1

Sliced tuna fish meat, weight 20 g, was homogenized with 500 ml of water in a mixer. After adjusting the pH of the homogenate, comprising mainly an aqueous dispersion of myo-protein, to 3.5 the homogenate was divided into two portions. One portion (A) was filtered through a gauge. The other portion (B) was filtered through a sheet of filter paper. Both transparent filtrates mainly comprised an aqueous dispersion of myo-protein.

These filtrates were labelled dispersions (A) and (B), respectively. They were separately subjected to electrodeposition in the chamber 7 of a small cell 1 of Figure 1.

A cathode of effective area 4 cm×9 cm, made of a stainless steel wire netting, was inserted in the cathode chamber 6 of the cell 1 and aqueous 0.2N sodium hydroxide was placed in this chamber. An anode of effective area of 4 cm×9 cm of DSA (titanium coated with ruthenium oxide) was inserted in the anode chamber 5 and an aqueous 0.1N hydro-chloric acid solution was placed in that chamber. As cation-exchange membranes 4 and 4', "Nafion" (E.I. Du Pont de Nemours & Co. Inc.) 110 membrane of 10 mil thickness and of 4 cm×9 cm in effective area was employed. This membrane is a fluoropolymer resin to which pendant sulfonate groups have been added chemically.

The distance between the ion-exchange membrane 4 and the cathode 3, between the two ion-exchange membranes, and between the ion-exchange membrane 4' and the anode 2 were, respectively, about 0.3 mm, about 15 mm and 0.3 mm. As the electric current, a direct current was supplied by a conventional rectifier connected to a stabilized current source.

An initial electrodepositing trial was performed at a constant 35 V. The fluctuation of the current was as shown in Table 1.

**0 011 504**

TABLE 1

| Dispersion (A) or (B) | Current (mA) | | |
|---|---|---|---|
| | Just after start | 2 Minutes after commencement of electrodeposition | 5 Minutes after commencement of electrodeposition |
| (A) | ca. 500 | 460 | 360 |
| (B) | ca. 500 | 320 | 270 |

From after 5 minutes of operation, the current slowly reduced to an almost constant value of 150 to 170 mA. After 10 minutes, the operation was stopped to determine the pH of the surface of the electrodeposited film. It was 4.7. The tuna fish protein deposited on the cation-exchange membrane 4 had attained a thickness of about 200 $\mu$ in the case (A) and was easily removable from the ion-exchange membrane. In the case (B), the deposit was about 150 $\mu$ thick and also could be easily removed from the membrane. In these films of tuna-fish protein, no bubbles were present. An extremely homogeneous film of protein had been formed.

Comparative Example 1

Using the same cell as in Example 1 but without the ion-exchange membranes 4 and 4' and using a stainless plate of 4 cm×9 cm as the cathode and a DSA anode, the same tuna fish protein as in Example 1 was electrodeposited as follows:

After introducing the aqueous dispersion of tuna-protein (A) into the cell, a direct current of a constant 35 V was applied for 10 minutes. By the time 10 minutes had elapsed, the current had reduced markedly from 210 mA to about 10 mA. Although the cathodic stainless plate was plated with the tuna-protein, the film of protein contained so many bubbles that it appeared lumpy.

Comparative Example 2

Electrodeposition of tuna fish protein was carried out in the same manner and using the same cell as in Example 1, except that a Membrane-filter-Nuclipore (General Electric Co., with a pore-diameter of 5) was used in place of the ion-exchange membrane 4. After introducing the aqueous dispersion of tuna-protein (A) of Example 1 into the chamber 7, an aqueous 0.2N sodium hydroxide solution into the cathode chamber 6 and an aqueous 0.1N hydrochloric acid solution into the anode chamber 5 electrodeposition of the protein onto the Membrane-filter-Nuclipore was effected using a direct current of 35 V. After 10 minutes of operation, the pH of the surface of the deposited film of tuna protein was high as of pH of about 8, and tuna-protein of the film was not dehydrated well but possessed a flabby feeling. This demonstrates that the control of protein

electrodeposition is difficult when a porous membrane is used in place of an ion-exchange membrane. Moreover, the adhesion of the protein to the porous membrane was so strong that the complete removal of the film of tuna-protein from the porous membrane was extremely difficult.

Example 2

Collagen protein obtained from ox hides was de-fatted thoroughly and after washing with water it was homogenized in water at a pH of 3.3 for 10 minutes. The resulting aqueous homogeneous dispersion of collagen contained about 0.3% by weight of the protein. The dispersion was introduced into the chamber 7 of the cell used in Example 1. Electrodeposition was performed under the same conditions as in Example 1, but using a voltage of 20 V. The current was at first 150 mA. However, as time passed it reduced and became about 50 mA after 10 minutes of operation. The film of collagen on the ion-exchange membrane 4 was extremely homogeneous in quality and dehydrated favourably without containing (including) any bubbles. The film was easily removable from the membrane.

Comparative Example 3

The aqueous dispersion of collagen protein used in Example 2 was treated in a cell as in Example 1 but without using (as in Comparative Example 2) ion-exchange membranes 4 and 4'. A Ferro plate of 4 cm×9 cm was used as the cathode and a platinum plate as the anode. Although a current of 20 V was applied at first, since the current showed a rapid reduction from 120 mA to a few milliampere at this voltage, the voltage was raised to 35 V. However, the current again showed a reduction to about 20 mA. The thus obtained collagen film included much gas evolved at the electrodes. The physical properties of the film could not be determined because of its flabby nature.

Example 3

Using the aqueous dispersion of about 0.3% by weight of ox hide-collagen protein obtained in Example 2, electrodeposition of this protein was effected after introducing the liquid into the chamber 7 of the cell shown in Figure 1 without, however, the ion-exchange membrane 4' adjacent the anode. After carrying out the deposition using only one ion-exchange membrane 4, it was found that the collagen deposited on the ion-exchange membrane was a homogeneous and well dehydrated film which did not include any bubbles. This film was almost in the same state as that obtained in Example 2. However, the pH of the spent aqueous dispersion was raised to about 4.2.

Example 4

This example illustrates the continuous electrodeposition of a protein.

The aqueous dispersion (A) of tuna-protein used in Example 1 of a pH of 3.5 was continuously introduced at a rate of about 280 ml/hour into the chamber 7 of the cell shown in Figure 1 from a port in an upper portion of the chamber 7 while stirring the lower part of the chamber, and was discharged from another port on the opposite part of the chamber 7. The electrodes and the construction of the cell were the same as in Example 1. An aqueous 0.2N sodium hydroxide solution was circulated in excess in the cathode chamber 6 to maintain the concentration of the alkali in the aqueous solution in the chamber 6 at 0.2N. Also, an aqueous 0.1N hydrochloric acid solution was circulated in excess in the anode chamber 5 to maintain the concentration of hydrochloric acid in that chamber at 0.1N. The ion-exchange membranes 4 and 4' were Nafion N-110 as used in Example 1.

On applying a direct current at a constant 35 V to the cell, the current was at first about 500 mA. However, after 2 minutes of operation and as the protein was gradually deposited on the ion-exchange membrane 4, the current reduced to about 400 mA. At this point of time, the upper end of the electrodeposited film of protein was detached from the membrane 4. This detached part of the film was constantly pulled upwards to obtain a continuous free film of protein at such a rate that the current was maintained in the range of 230 to 300 mA. The resulting film was washed in water of pH of 7.0. This film of the tuna-protein was of 120 $\mu$ in thickness when wet, did not include any bubbles and was extremely homogeneous in quality.

Example 5

An aqueous 2% by weight solution of ovo-albumin with a pH adjusted to 5.7 was used in a process of double electrodeposition in the cell shown in Figure 2. This solution was introduced into the chambers 20 and 20'. The electrodes and ion-exchange membranes used in this Example, and the distances between each ion-exchange membrane and each electrode and those between each ion-exchange membrane were the same as in the cell used in Example 1. An aqueous 0.2N sodium hydroxide solution was placed in the cathode chambers 18 and 18', and an aqueous physiological saline solution was placed in the anode chamber 19, both as electrolytic solutions. In operation, a direct current was applied at a constant 35 V between the cathode and the anode. During the operation the current increased, from 4 A to 6.5 A. The ovo-albumin was deposited on the ion-exchange membranes 15 and 16 as almost homogeneous films, and in each film no bubbles were observed. There were no differences apparent between the two films. At the end of the operation, the pH values of the spent aqueous dispersions were 11.9 and 12.1, respectively, showing no noticeable difference.

Example 6

A specimen of equine serum (Type 1, Pel-Freez Biologicals Inc.) with a pH adjusted to 10.0 was placed in the chamber 7 of the cell used in Example 1. An aqueous 0.2N sodium hydroxide solution was placed in the cathode chamber 6 and an aqueous physiological solution was placed in the anode chamber. After applying a direct current at a constant 20 V for 5 minutes, a film of equine serum was observed on the ion-exchange membrane 4'. The thus obtained film of protein was homogeneous in quality and did not include any bubbles. The pH of the spent aqueous liquid was 11.5.

Example 7

The equine serum used in Example 6 was diluted with 5 times its volume of de-ionized water. After adjusting the pH of the diluted serum to 7.5, it was continuously supplied to the cell shown in Figure 3 from the inlet 21 to the chamber 118. In the cathode chamber, an aqueous 0.2N sodium hydroxide solution was introduced from an inlet provided on the manifold 23 and circulated through to an outlet also provided on the same manifold 23. In the anode chamber 117. An aqueous physiological saline solution was introduced from a tubular inlet provided on the rotary axis 24 and circulated by discharging solution from a tubular outlet also provided on the axis 24. The drum-shaped anode 113 and the ion-exchange membrane 115 were rotated clockwise by the rotary axis 24 at a rate of 90 cm/Hr.

The radius of the rotary drum-type ion-exchange membrane 115 was 5 cm, and the effective area of the membrane was about 2 cm × 15 cm, and the radius of curvature of the fixed semi-drum-type ion-exchange membrane 144 was 6.5 cm.

A direct current was applied at a constant 20 V while treating the aqueous liquid of 400 ml for one hour to form a gel film of equine serum-protein deposited on the rotary drum-type ion-exchange membrane 115. After scraping the thus formed thin film off membrane 115 with the scraper 25, a homogeneous film of equine serum-protein was obtained. The current change from 2.2 A to 1.8 A during the electrodeposition operation. The pH of the spent aqueous liquid was 10.5 to 11.0.

## Claims

1. A method of electrically depositing a protein on an ion-exchange membrane, which method comprises introducing the protein dissolved or dispersed in an aqueous liquid into a chamber (7) of an electrodepository system, said electrodepository system having an anode (2) and a cathode (3) and being divided into two or more chambers (5, 6, 7) by one or more respective ion-exchange membranes (4, 4') disposed between said anode and cathode and an aqueous electrolyte solution being introduced into the electrode chamber (6; 5) separated from said chamber into which the protein solution or dispersion is introduced by the ion-exchange membrane (4; 4') onto which the protein is to be deposited, and causing the protein to be deposited on said ion-exchange membrane (4; 4') by electrophoresis, the pH of the surface of the ion-exchange membrane (4; 4') on which protein is deposited being controlled by appropriately adjusting the difference between the pH of the aqueous electrolyte solution and the pH of the aqueous solution or dispersion of protein.

2. A method according to Claim 1, wherein a single ion-exchange membrane is disposed between an anode and a cathode and the protein is positively charged and is introduced into the anode chamber or the protein is negatively charged and is introduced into the cathode chamber or two ion-exchange membranes (4; 4') are disposed between an anode (2) and a cathode (3) and the protein is introduced into the chamber (7) between the two membranes.

3. A method according to Claim 1 or 2 wherein the aqueous electrolyte solution is an alkaline solution if the protein is positively charged or is an aqueous solution of an inorganic acid if the protein is negatively charged, said aqueous alkaline solution being supplied to the cathode chamber (6) or said aqueous solution of inorganic acid being supplied into the anode chamber (5), at a concentration of 0.1 to 5N.

4. A method according to Claim 3, wherein the aqueous alkaline solution is an aqueous solution of sodium hydroxide.

5. A method according to any one of the preceding claims wherein the aqueous electrolyte solution is circulated through the electrode chamber (5, 6) to which it is supplied and electrophoresis is performed continuously.

6. A method according to any one of the preceding claims, wherein the pH of the aqueous solution or dispersion of protein is from 2.0 to 10.0.

7. A method according to any one of the preceding claims wherein the ion-exchange membrane (4, 4') is a fluoropolymer, intermolecularly bridged acrylic acid resin, intermolecularly bridged methacrylic acid resin, copolymer of sulfonated styrene and divinylbenzene or a quaternized vinylpyridine resin, substituted by at least one group selected from sulfonate, carboxylate and phenol groups.

8. A method according to any one of the preceding claims wherein the protein is an ovo-protein, lacto-protein serum-protein, myo-protein, seed-protein, scleroprotein, chromo-protein, phosphoprotein, glycoprotein, nucleo-protein or lipoprotein, or a mixture thereof.

9. Apparatus for the electrodeposition of a protein comprising at least one cell (111) comprising an anode (113), a cathode (112), and being divided into two or more chambers by one or more respective ion-exchange membranes (115, 144) disposed between said anode and cathode, means (21) for introducing an aqueous solution or dispersion of a protein into an appropriate chamber to result in the electrodeposition of the protein on a surface of a said membrane in use, and means (25) to remove protein thus deposited from said surface.

10. Apparatus according to Claim 9 and including means (24) to achieve movement of said one ion-exchange membrane (115) relative to the aqueous solution or dispersion of protein which is introduced into said cell, in use, and means (25) for continuously removing from said ion-exchange membrane protein electrodeposited thereon.

11. Apparatus according to Claim 9 or 10 and including means (21, 22) to achieve the continuous flow of the aqueous solution or dispersion of protein through the cell, in use.

12. Apparatus according to Claim 10 or 11 wherein said one ion-exchange membrane (115) is continuously movable along a closed path relative to said means (25) for continuously removing electrodeposited protein therefrom.

13. Apparatus according to Claim 11 wherein said one ion-exchange membrane (115) and the one (113) of said anode and cathode to which, in use, said protein is attracted are cylindrical and concentric with each other and with the other (112) of said anode and said cathode, which other electrode is at least part cylindrical.

## Patentansprüche

1. Verfahren zum elektrolytischen Abscheiden eines Proteins an einer Ionenaustauschermembran, welches Verfahren die Einführung des in einer wässrigen Flüssigkeit gelösten oder dispergierten Proteins in eine Kammer (7) eines elektrolytischen Abscheidungssystems umfaßt, wobei das elektrolytische Abscheidungssystem eine Anode (2) und eine Kathode (3) aufweist und mittels einer oder mehreren zwischen Anode und Kathode angeordneten Ionenaustauschermembranen (4; 4') in zwei oder mehr Kammern (5; 6; 7) unterteilt ist und bei dem eine wässrige Elektrolytlösung in die von der Kammer, in welche die Proteinlösung oder -dispersion eingeführt wurde, mittels der Ionenaustauschermembranen (4; 4'), auf denen das Protein abgeschieden werden soll, getrennten Elektrodenkammern (6; 5) gegeben wird, sowie Abscheiden des Proteins an den Ionenaustauschermembranen (4; 4') durch Elektrophorese, wobei der PH-Wert an der Oberfläche der Ionenaustauschermembranen (4; 4'), auf denen Protein abgeschieden ist, gesteuert wird und passendes Einstellen der Differenz zwischen dem PH-Wert der wässrigen Elektrolytlösung und dem PH-Wert der wässrigen Proteinlösung oder -dispersion.

2. Verfahren nach Anspruch 1, bei dem eine einzige Ionenaustrauschermembran zwischen Anode und Kathode angeordnet wird und das Protein positiv geladen ist und in die Anodenkammer eingeführt wird oder bei dem das Protein negativ geladen ist und in die Kathodenkammer eingeführt wird oder bei dem zwei Ionenaustauschermembranen (4; 4') zwischen Anode (2) und Kathode (3) angeordnet werden und das Protein in die Kammer (7) zwischen den beiden Membranen eingeführt wird.

3. Verfahren nach Anspruch 1 oder 2, bei welchem die wässrige Elektrolytlösung, falls das Protein positiv geladen ist, eine alkalische Lösung ist oder, falls das Protein negativ geladen ist, eine wässrige Lösung einer anorganischen Säure ist, wobei die wässrige alkalische Lösung in die Kathodenkammer (6) oder die wässrige Lösung einer anorganischen Säure in die Anodenkammer (5) gegeben wird und zwar mit einer Konzentration von 0,1 bis 5N.

4. Verfahren nach Anspruch 2, bei welchem die wässrige alkalische Lösung eine wässrige Lösung von Natrium-hydroxid ist.

5. Verfahren nach irgendeinem der vorausgehenden Ansprüche, bei welchem die wässrige Elektrolytlösung durch die Elektrodenkammern (5; 6), in welche sie gegeben werden, zirkuliert und die Elektrolyse kontinuirelich durchgeführt wird.

6. Verfahren nach irgendeinem der vorausgehenden Ansprüche, bei welchem der PH-Wert der wässrigen Lösung oder Dispersion des Proteins 2,0 bis 10,0 beträgt.

7. Verfahren nach irgendeinem der vorausgehenden Ansprüche, bei welchem die Ionenaustauschermembran (4; 4') ein Fluorpolymer, eine intermolekular vernetztes Acrylsäureharz, in intermolekular vernetztes Methacrylsäureharz, ein Copolymer des sulfonierten Styrols und Divinylbenzols oder eine quarternäres Vinylpyridinharz ist, substituiert durch wenigstens eine Gruppe, welche aus des Sulfonat-, Carboxylat- und Phenol-Gruppen ausgewählt worden ist.

8. Verfahren nach irgendeinem der vorausgehenden Ansprüche, bei welchem das Protein ein Eiprotein, Milchprotein, Serumprotein, Muskelprotein, Samenprotein, Skleroprotein, Chromoprotein, Phosphoprotein, Glykoprotein, Nucleoprotein oder Lipoprotein oder eine Mischung dieser Stoffe ist.

9. Vorrichtung zum elektrischen Abscheiden von Protein mit wenigstens einer Zelle (111), welche eine Anode (113) und eine Kathode (112) enthält und welche in zwei oder mehrere Kammern durch jeweils eine oder mehr Ionenaustauschermembranen (115; 144) unterteilt ist, welche zwischen der Anode und der Kathode angeordnet ,sind, ferner mit Mitteln (21) zum Einführen einer wässigen Lösung oder Dispersion eines Proteins in eine geeignete Kammer, um das elektrolytische Abscheiden des Proteins an der Oberfläche der werwendeten Membran zu erzielen sowie Mittel (25), um das derart abgeschiedene Protein von der Oberfläche zu entfernen.

10. Vorrichtung nach Anspruch 9 mit Mitteln (24), um eine Bewegung der benutzten Ionenaustauschermembran (115) relativ zur wässrigen Lösung oder Dispersion des Proteins, welche in die besage Zelle eingeführt worden ist, zu erreichen sowie Mitteln (25) zum kontinuierlichen Entfernen des auf der Ionenaustauschermembran abgeschiedenen Proteins.

11. Vorrichtung nach Anspruch 9 oder 10 mit Mitteln (21; 22) um einen kontinuierlichen Fluß der wässrigen Lösung oder Dispersion des Proteins durch die Zellen während des Gebrauches zu erreichen.

12. Vorrichtung nach Anspruch 10 oder 11, bei welcher die Ionenaustauschermembran (115) entlang eines geschlossenen Pfades relativ zu den Mitteln (25) für die kontinuierliche Entfernung des elektrisch abgeschiedenen Proteins kontinuierlich bewegbar ist.

13. Vorrichtung nach Anspruch 11, bei welcher die Ionenaustauschermembran (115) sowie diejenige Elektrode, entweder Anode oder Kathode, zu welcher während des Gebrauchs das Protein wandert, zylindrisch und konzentrisch zueinander sind sowie auch zu der anderen Elektrode (112) (Anode oder Kathode), welche zumindest teilweise cylindrisch ist.


**Revendications**

1. Procédé pour déposer électriquement une protéine sur une membrane d'échange ionique, procédé consistant à introduire la protéine dissoute ou dispersée dans un liquide aqueux à l'intérieur d'une chambre (7) d'un système d'électrodéposition, ledit système d'électrodéposition comportant une anode (2) et une cathode (3) et étant divisé en deux chambres ou plus (5, 6, 7) par une ou plusieurs membranes d'échange ionique (4, 4') respectives disposées entre l'anode et la cathode et une solution d'électrolyte aqueuse étant introduite dans la chambre à électrodes (6; 5) qui est séparée de la chambre dans laquelle la solution ou dispersion protéine est introduite par la membrane d'échange ionique (4; 4') sur laquelle la protéine doit être déposée, et en faisant déposer la protéine sur ladite membrane d'échange ionique (4; 4') par électrophorèse, le pH de la surface de la membrane d'échange ionique (4; 4') sur laquelle la protéine est déposée étant commandé par un réglage approprié de la différence entre le pH de la solution d'électrolyte aqueuse et le pH de la solution ou dispersion aqueuse de protéine.

2. Procédé selon la revendication 1, dans lequel une seule membrane d'échange ionique est disposée entre une anode et un cathode et en ce que la protéine est chargée positivement et est introduite dans la chambre anodique ou bien la protéine est chargée négativement et est introduite dans la chambre cathodique, ou bien deux membranes d'échange ionique (4; 4') sont disposées entre une anode (2) et une cathode (3) et la protéine est introduite dans la chambre (7) entre les deux membranes.

3. Procédé selon l'une des revendications 1 ou 2, dans lequel la solution aqueuse d'électrolyte est une solution alcaline si la protéine est chargée positivement, ou bien est une solution aqueuse d'une acide minéral si la protéine est chargée négativement, ladite solution alcaline aqueuse étant introduite dans la chambre cathodique (6) ou bien ladite solution aqueuse d'acide minéral étant introduite dans la chambre anodique (5), à une concentration de 0,1 à 5N.

4. Procédé selon la revendication 3, dans lequel la solution alcaline aqueuse est une solution aqueuse d'hydroxyde de sodium.

5. Procédé selon l'une quelconque des revendications précédentes, dans lequel la solution aqueuse d'électrolyte est mise en circulation au travers de la chambre à électrodes (5, 6) dans laquelle elle est introduite et en ce qu'une électrophèse est effectuée de façon continue.

6. Procédé selon l'une quelconque des revendications précédentes, dans lequel le pH de la dispersion ou solution aqueuse de protéine est compris entre 2,0 et 10,0.

7. Procédé selon l'une quelconque des revendications précédentes, dans lequel la membrane d'échange ionique (4, 4') est un fluoropolymère, une résine d'acide acrylique à pontage intermoléculaire, une résine d'acide méthacrylique à pontage intermoléculaire, un copolymère sulfoné de styrène et de divinylbenzène ou bien une résine de vinylpyridine quaternisé, substituée par un moins un groupe choisi parmi des groupes sulfonates, carboxylates et phénols.

8. Procédé selon l'une quelconque des revendications précédentes, dans lequel la protéine est une protéine d'oeuf, une protéine de lait, une protéine de sérum, une myoprotéine, une protéine de semence, une scléroprotéine, une chromoprotéine, une phosphoprotéine, une glycoprotéine, une nucléoprotéine, une lipoprotéine ou un mélange desdites substances.

9. Appareil pour l'électrodéposition d'une protéine, comprenant au moins une cellule (111) comportant une anode (113), une cathode (112), et divisé en deux chambres ou plus par une ou plusieurs membranes d'échanges ioniques respectives (115, 144) disposées entre l'anode et la cathode, un moyen (21) pour introduire une solution ou dispersion aqueuse d'une protéine dans une chambre appropriée de façon à assurer l'électrodéposition de la protéine sur une surface d'une desdites membranes en service et un moyen (25) pour enlever la protéine ainsi déposée à partir de ladite surface.

10. Appareil selon la revendication 9 et comprenant des moyens (24) pour assurer un mouvement de ladite membrane d'échange ionique (115) par rapport à la dispersion ou solution aqueuse de protéine qui est introduite dans ladite cellule, en surface, et des moyens (25) pour enlever de façon continue de ladite membrane d'échange ionique, la protéine déposée électriquement sur celle-ci.

11. Appareil selon l'une des revendications 9 ou 10 et comprenant des moyens (21, 22) pour assurer l'écoulement continu de la solution ou dispersion aqueuse de protéine au travers de la cellule en service.

12. Appareil selon l'une des revendications 10 ou 11, dans lequel ladite membrane d'échange ionique (115) est déplaçable de façon continue le long d'un trajet fermé par rapport auxdits moyens (25) d'enlèvement continu de la protéine déposée électriquement à partir de la membrane.

13. Appareil selon la revendication 11, dans lequel ladite membrane d'échange ionique (115) et celle (113) desdites anode et cathode par laquelle, en service, ladite protéine est attirée, sont cylindriques et concentriques l'une par rapport à l'autre et également par rapport à l'autre (112) desdites anode et cathode, ladite autre électrode étant au moins partiellement cylindrique.

# FIG. 1

# FIG. 2

# FIG. 3